# EUROPÄISCHE PATENTSCHRIFT

(11) **EP 0 875 009 B1**
(45) Veröffentlichungstag und Bekanntmachung des Hinweises auf die Patenterteilung: **28.03.2001**
(21) Anmeldenummer: 96943097.4
(22) Anmeldetag: 12.12.1996
(51) Int. Cl.: G02B 5/18

(54) **VERFAHREN ZUM HERSTELLEN EINES REFLEXIONSGITTERS FÜR MIKROSPEKTROMETER**
METHOD OF PRODUCING A MICROSPECTROMETER REFLECTION GRATING
PROCEDE DE PRODUCTION D'UNE GRILLE DE REFLEXION POUR MICROSPECTROMETRE

(30) Priorität: 20.01.1996 DE 19602079
(43) Veröffentlichungstag der Anmeldung: 04.11.1998
(73) Patentinhaber: Forschungszentrum Karlsruhe GmbH, 76133 Karlsruhe (DE)
(72) Erfinder: SCHUBERT, Klaus, D-76227 Karlsruhe (DE); BOHN, Lothar, D-76707 Hambrücken (DE)
(74) Vertreter: Rückert, Friedrich, Dr.
(86) Internationale Anmeldenummer: EP9605563
(87) Internationale Veröffentlichungsnummer: WO9726568

(56) Entgegenhaltungen:
- US-A- 5 152 060
- APPLIED OPTICS, Bd. 20, Nr. 12, 15.Juni 1981, Seiten 2139-2142, XP002027828 M.C.E. HUBER ET AL: "Toroidal grating obtained on an elastic substrate"
- PATENT ABSTRACTS OF JAPAN vol. 009, no. 236 (P-390), 21.September 1985 & JP 60 090311 A (NIPPON DENSHIN DENWA KOSHA), 21.Mai 1985, in der Anmeldung erwähnt
- OPTICS LETTERS, Bd. 6, Nr. 12, Dezember 1981, Seiten 639-641, XP002027829 H.W. YEN ET AL: "Planar Rowland spectrometer for fiber-optic wavelength demultiplexing" in der Anmeldung erwähnt
- LASER FOCUS WORLD, Nr. 5, 30.Mai 1994, Seiten 45-46, XP000447064 R. ROUX: "Fine gratings extend spectrograph resolution"

## Beschreibung

Die Erfindung betrifft ein Verfahren zum Herstellen eines selbstfokussierenden Reflexionsgitters für Mikrospektrometer gemäß dem Oberbegriff von Anspruch 1.

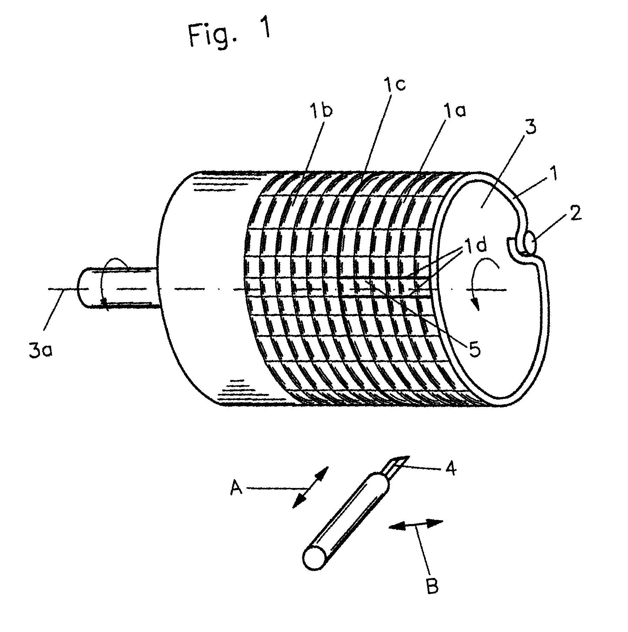

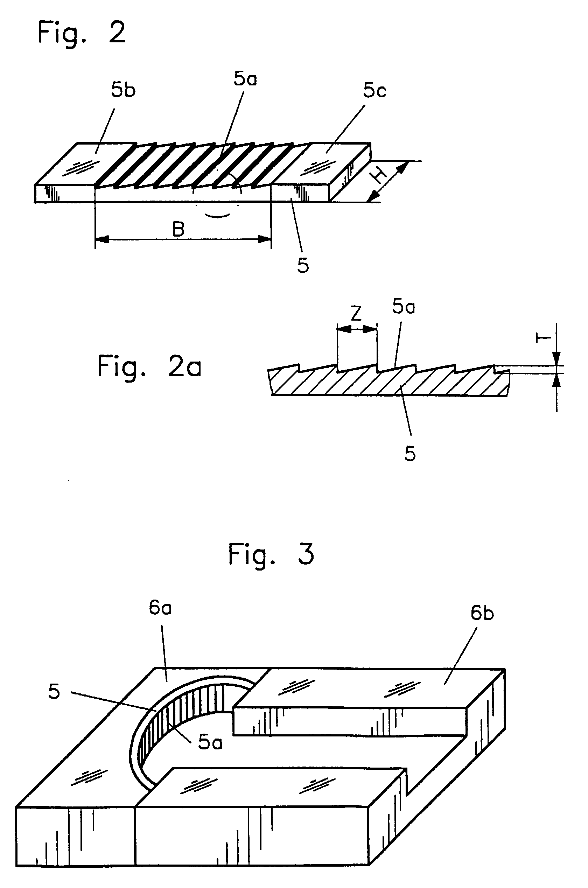

In SPIE, Vol. 503, Application, Theory and Fabrication of Periodic Structures (1984), Seiten 23 und 24, ist eine Konfiguration mit einem konkaven Gitter beschrieben und dargestellt, bei der eine Siliziumscheibe mit dem Reflexionsgitter zylindrisch gebogen auf die Stirnseite eines flachen Multimode-Wellenleiters aufgespannt wird (siehe Fig. 3 auf Seite 24). Eine ähnliche Anordnung ist aus der Fig. 1b der JP-OS 60-90311 vom 21. Mai 1985 bekannt . Aus OPTICS LETTERS, Vol. 6, No. 12, Dec. 1981, Seiten 639 bis 641 ist ein planares Rowland-Spektrometer bekannt mit einem flexiblen Reflexionsgitter, das auf einem dünnen Glassubstrat mittels Holographie und Ionenstrahl-Ätzen hergestellt wurde. Dieses flexible Gitter wird in einen Spannrahmen eingesetzt und gegen die gewölbte Stirnseite des Wellenleiters des Spektrometers gepreßt (siehe Fig. 3 auf Seite 640). Während im Zuge der Herstellung der Wellenleiter dreißig Strukturen an ihren stirnseitigen, gewölbten Flächen gleichzeitig poliert werden (siehe Seite 639, linke Spalte, unten) müssen die flexiblen Reflexionsgitter in Einzelfertigung hergestellt werden.

Ausgehend von diesem zuletzt erörterten Stande der Technik ist es Aufgabe der Erfindung, auch für die Herstellung der Reflexionsgitter ein Verfahren bereitzustellen, das für eine Serienfertigung geeignet ist, wobei der Krüwmungsradius, die Breite und die Höhe des Reflexionsgitters in weiten Grenzen frei wählbar sein sollen.

Diese Aufgabe wird mit den kennzeichnenden Schritten von Anspruch 1 gelöst; die hierauf bezogenen Unteransprüche beinhalten vorteilhafte Weiterbildungen und Ausgestaltungen dieser Lösung.

Mit dem erfindungsgemäßen Verfahren können bei gleichbleibend hoher Qualität in einem Arbeitsgang die Gitterzackenstrukturen für einige hundert Folienstreifen hergestellt werden. Die Breite und Höhe der Reflexionsgitterstrukturen können in weiten Grenzen frei gewählt werden. Eine für die Durchführung des Verfahrens geeignete Drehmaschine und Formdiamanten, mit denen feinste Strukturen im µm-Bereich in eine Folie eingearbeitet werden können, sind in der DE 37 09 278 C2 erwähnt.

Ein Ausführungsbeispiel der Erfindung wird anhand der Figuren erläutert:
Die Figur 1 zeigt schematisch die Spannscheibe einer Ultrapräzisionsdrehmaschine mit aufgespannter Folie,
die Figur 2 einen mit der Gitterstruktur versehenen Folienstreifen,
die Figur 2a in starker Vergrößerung den Querschnitt der Gitterstruktur gemäß Figur 2, und
Figur 3 zwei Gehäuseteile eines Mikrospektrometers mit dazwischen geklemmter Gitterfolie.

Die Figur 1 zeigt eine dünne Folie 1 aus Metall oder Kunststoff, z. B. eine 100 µm dicke Kupferfolie, die mittels eines versenkten Spannelements 2 auf der Spannscheibe 3 einer Ultrapräzisionsdrehmaschine eingespannt ist. Die Spannscheibe wird in Drehung versetzt und in die Folie 1 werden mit einem in den Richtungen "A" und "B" verschiebbaren Mikroformdiamanten 4 in Umfangsrichtung zwei Scharen 1a, 1b von parallel zueinander verlaufenden Gitterzacken 5a mit vorgegebenem Zackenabstand, z. B. 10 µm, und Zackentiefe, z. B. 1,6 µm, eingearbeitet, so daß eine Gitterzackenstruktur vorgebbarer Breite und Tiefe entsteht. Durch einen peripheren Trennschnitt lc werden die Scharen 1a, 1b voneinander getrennt. Durch parallel zur Drehmaschinenachse 3a verlaufende Schnitte ld wird die strukturierte Folie 1 in eine Vielzahl schmaler Folienstreifen 5 zerlegt. Die Trennschnitte 1c bestimmen die Breite, die Abstände der Schnitte 1d die Höhe der Folienstreifen 5 und damit die Höhe H des Reflexionsgitters mit den Gitterzacken 5a.

Die Figur 2 zeigt einen solchen Folienstreifen 5 mit der Höhe H und mit einem mittleren Bereich der Breite B, der die eingearbeiteten parallelen Gitterzacken 5a aufweist; zwei unbear-beitete Randbereiche 5b, 5c schließen sich an den strukturierten mittleren Bereich an. Die Figur 2a zeigt in stark vergrößertem Maßstab die sägezahnartige Gitterstruktur 5a. Zackenbreite Z (Gitterkonstante) und Zackentiefe T können je nach Verwendungszweck variieren. Bei Verwendung von schlecht reflektierenden Folienmaterialien, insbesondere von Kunststoffolien, sind die strukturierten Oberflächen mit einem gut reflektierenden Metall, z. B. Gold, durch Sputtern oder Aufdampfen zu beschichten.

Die Figur 3 zeigt zwei Gehäuseteile 6a, 6b eines planaren Rowland-Spektrometers z. B. für IR-Strahlung, zwischen denen der die Reflexions-Gitterstruktur 5a aufweisende Folienstreifen 5 der Figur 2 eingeklemmt ist. Dabei entspricht die konkave Krümmung des Gehäuseteils 6a, die den Folienstreifen 5 mit seiner glatten Rückseite aufnimmt und flächig abstützt, dem Gittergrundkreis, während die (nicht dargestellten) Enden der Lichtleiter zum Ein- und Auskoppeln des IR-Lichtes gegenüberliegend auf dem Rowlandkreis angeordnet sind (siehe hierzu auch FZKA-Bericht 5609 des Forschungszentrums Karlsruhe GmbH, Juni 1995, Seiten 14 und 15).

Auf der Folie 1 wird vor dem Aufspannen auf die Spannscheibe 3 eine dünne Metallschicht galvanisch, z. B. aus Kupfer, Silber oder Gold, oder chemisch, z. B. aus Nickel, abgeschieden. Die Oberfläche dieser dünnen Metallschicht wird vorzugsweise feinstgeschliffen. Nach dem Aufspannen der Folie 1 auf die Spannscheibe 3 der Drehmaschine werden in die Oberfläche der dünnen Metallschicht die Gitterzacken 5a eingearbeitet, worauf - wie vorbeschrieben - die Schnitte 1c und 1d zur Bildung der Folienstreifen 5 angebracht werden.

Mit der genannten Methode lassen sich Gitterfolienstreifen mit hoher metallischer Reinheit, hoher Oberflächengüte und weitgehender Spannungsfreiheit herstellen.

Alternativ zu diesen Verfahren lassen sich montierte Spektrometer durch Abformen reproduzieren.

Hierzu wird das Spektrometer mit dem selbstfokussierenden Reflexionsgitter galvanisch abgeformt, wobei eine Negativform des Spektrometers entsteht. Mit dieser Negativform, die als Werkzeug eingesetzt wird, lassen sich in bekannter Weise durch nochmalige Abformung Positivformen des Spektrometers erzeugen.

## Patentansprüche

1. Verfahren zum Herstellen eines fokussierenden Reflexionsgitters für die Serienfertigung von Mikrospektrometern, in Gestalt von flexiblen, die Gitterstruktur tragenden Folienstreifen, die mit Stützstrukturen eines Gehäuses oder von Gehäuseteilen der Mikrospektrometer zusammengefügt werden, gekennzeichnet durch folgende Schritte:
a) eine Folie (1) aus Metall oder Kunststoff wird galvanisch oder chemisch mit einer dünnen Schicht eines gut reflektierenden Metalls beschichtet;
b) die beschichtete Folie (1) wird auf die Spannscheibe (3) einer Ultrapräzisionsdrehmaschine gespannt;
c) die Spannscheibe (3) wird in Drehung versetzt und in die Schicht des gut reflektierenden Metalls auf der Folie (1) werden mit Mikroformdiamanten in Umfangsrichtung parallel zueinander verlaufende Gitterzacken (5a) mit vorgegebenem Zackenabstand eingearbeitet, so daß eine sägezahnförmige Gitterzackenstruktur vorgebbarer Breite und Tiefe entsteht;
d) anschließend wird die Folie (1) mittels parallel zur Drehmaschinenachse (3a) verlaufender Schnitte (1d) in eine Vielzahl schmaler, biegbarer Folienstreifen (5) zerlegt, wobei die gegenseitigen Abstände der Schnitte (1d) die Höhe der Folienstreifen bestimmen, wonach
e) die biegbaren Folienstreifen (5) in die gebogene Form des fokussierenden Reflexionsgitters gebracht werden.

2. Verfahren nach Anspruch 1, dadurch gekennzeichnet, daß die Schicht des gut reflektierenden Metalls auf der Folie (1) durch galvanische Abscheidung von Kupfer, Silber oder Gold oder durch chemische Abscheidung von Nickel erzeugt und feinstgeschliffen wird.

3. Verfahren nach Anspruch 1 oder 2, dadurch gekennzeichnet, daß in die Schicht des gut reflektierenden Metalls wenigstens zwei Scharen (1a, 1b) von Gitterzackenstrukturen (5a) gemäß Merkmal c) eingearbeitet werden, die durch wenigstens einen peripheren Trennschnitt (lc) voneinander getrennt werden.

4. Verfahren zur Herstellung eines Spektrometers unter Verwendung eines mit dem Verfahren nach einem der Ansprüche 1 bis 3 hergestellten Gitters, dadurch gekennzeichnet, daß das fokussierende Reflexionsgitter in ein planares Rowland-Spektrometer eingespannt wird.

5. Verfahren nach Anspruch 4, dadurch gekennzeichnet, daß das Rowland-Spektrometer mit dem fokussierenden Reflexionsgitter galvanisch abgeformt wird, wobei eine Negativform entsteht.

6. Verfahren nach Anspruch 5, dadurch gekennzeichnet, daß die Negativform als Werkzeug zur Abformung eines fokussierenden Spektrometers eingesetzt wird.

## Claims

1. Method of producing a focussing reflection grating for the mass-production of microspectrometers, in the form of flexible foil strips, which carry the grating structure and are joined together by supporting structures of a housing or by housing parts of the microspectrometers, characterised by the following steps:
a) a foil (1), formed from metal or plastics material, is galvanically or chemically coated with a thin layer of a highly reflective metal;
b) the coated foil (1) is clamped onto the clamping plate (3) of an ultraprecision lathe;
c) the clamping plate (3) is rotated, and grating teeth (5a), which extend parallel to one another, are formed in the layer of the highly reflective metal on the foil (1) by microshaping diamonds in the circumferential direction and have a predetermined spacing between the teeth, so that a sawtooth-like grating tooth structure of predeterminable width and depth is produced;
d) subsequently the foil (1) is divided into a plurality of narrow, bendable foil strips (5) by means of cuts (1d), which extend parallel to the lathe axis (3a), the mutual spacings between the cuts (1d) determining the height of the foil strips, whereupon
e) the bendable foil strips (5) are brought into the curved form of the focussing reflection grating.

2. Method according to claim 1, characterised in that the layer of the highly reflective metal on the foil (1) is produced by the electrodeposition of copper, silver or gold or by the chemical deposition of nickel and microfinished.

3. Method according to claim 1 or 2, characterised in that at least two bands (1a, 1b) of grating tooth structures (5a) according to feature c) are formed in the layer of the highly reflective metal and are separated from each other by at least one peripheral severance cut (1c).

4. Method of producing a spectrometer by employing a grating which has been produced with the method according to one of claims 1 to 3, characterised in that the focussing reflection grating is clamped into a planar Rowland spectrometer.

5. Method according to claim 4, characterised in that the Rowland spectrometer is galvanically shaped with the focussing reflection grating, a negative form being produced.

6. Method according to claim 5, characterised in that the negative form is used as a tool for shaping a focussing spectrometer.

## Revendications

1. Procédé de fabrication d'un réseau de réflexion focalisant pour la fabrication en série de microspectromètres, sous la forme de bandes souples, portant la structure du réseau, et que l'on réunit à des structures de support d'un boîtier ou de partie du boîtier du microspectromètre,
caractérisé en ce que
a) on revêt une feuille (1) en métal ou en matière plastique avec une mince couche par voie galvanique ou chimique, cette couche étant en un métal à bonnes caractéristiques de réflexion,
b) on tend la feuille (1) ainsi revêtue sur le disque de tension (3) d'un tour à ultraprécision,
c) on fait tourner le disque (3) et on usine dans la couche de métal à bonnes caractéristiques de réflexion appliquée sur la feuille (1), avec des micro-diamants, des dents de réseau (5a) qui sont parallèles dans la direction périphérique et ont un intervalle de dents prédéterminé pour obtenir une structure de dents de réseau en dents de scie, de largeur et de profondeur données,
d) puis on décompose la feuille (1) à l'aide de coupes (1d) parallèles à l'axe de rotation (3a) du tour en un grand nombre de bandes de feuille souples étroites (5), les intervalles réciproques des coupes (1d) définissant la hauteur des bandes de feuille, et
e) on met les bandes de feuille (5) souples sous la forme cintrée du réseau de réflexion, focalisant.

2. Procédé selon la revendication 1,
caractérisé en ce qu'
on réalise la couche de métal à bonnes caractéristiques de réflexion sur la feuille (1) par dépôt galvanique de cuivre, argent ou or ou par dépôt chimique de nickel et on rode la surface.

3. Procédé selon la revendication 1 ou 2,
caractérisé en ce qu'
on usine, dans la couche du métal à bonnes caractéristiques de réflexion, au moins deux faisceaux (1a, 1b) de structure en dents de scie de réseau (5a) selon la caractéristique (c) et on les sépare par au moins une ligne de coupe (1c) périphérique.

4. Procédé de fabrication d'un spectromètre en application d'un réseau obtenu par le procédé de l'une des revendications 1 à 3,
caractérisé en ce qu'
on tend le réseau de réflexion focalisant dans un spectromètre de Rowland, planaire.

5. Procédé selon la revendication 4,
caractérisé en ce qu'
on copie par moulage le spectromètre de Rowland avec le réseau de réflexion focalisant, par moulage galvanique, pour obtenir un négatif.

6. Procédé selon la revendication 5,
caractérisé en ce qu'
on utilise le négatif comme outil pour copier par moulage un spectromètre focalisant.
